# EUROPEAN PATENT APPLICATION

(11) **EP 4 678 957 A1**
(43) Date of publication of application: **14.01.2026**
(21) Application number: 25184183.9
(22) Date of filing: 20.06.2025
(51) Int. Cl.: F16J 15/34, F16J 15/40

(54) **CARTRIDGE PROVIDED WITH A DOUBLE MECHANICAL SEAL**

(30) Priority: 11.07.2024 SI 202400109
(71) Applicant: Kroma.SI d.o.o., 1000 Ljubljana (SI)
(72) Inventor: RINKOVEC, Borjan, 26000 Pancevo (RS)
(74) Representative: Sveticic, Andrej

(57) **Abstract**

The invention relates to a cartridge device (1) provided with a double mechanical seal to seal a drive shaft of a mixer etc. and comprising a seal sleeve (10) adapted to receive a drive shaft (11) of a mixer; a cartridge device housing (20) mounted on the seal sleeve (10); a process mechanical seal (30); an atmospheric mechanical seal (40); a cartridge space (50) being intended to receive a cooling fluid; and a volumetric pump (60) integrated in the cartridge space to divide it in two portions, the volumetric pump comprising a stator (61) arranged inside the housing (20) and having an inner cylindrical wall arranged eccentrically with respect to its outer cylindrical wall, a rotor (62) having four spring biased sliding vanes (63) and arranged on the outer circumference of the seal sleeve and in the stator (61) centrally with respect to the outer cylindrical wall of the stator, and two axial plates (64, 65) laterally closing the rotor, the first axial plate (64) being provided with an inlet port (66) and the second axial plate being provided with an outlet port (67) arranged in the radial direction of the cartridge device diametrically opposite the inlet port, wherein the cartridge device housing is provided with two apertures (24, 25) intended for the attachment of ducts (71, 72) of a heat exchanger (70). The advantage of the cartridge device of the invention is to provide a sufficient flow of the cooling fluid to cool the faces of the mechanical seals even when used in high-temperature applications and/or applications having low rotational speeds.

## Description

### Field of invention

The invention relates to a cartridge device provided with a double mechanical seal to seal a drive shaft of a mixer, vibrational mixer etc.

### Prior Art

Cartridge devices provided with a double mechanical seal are known from prior art. They generally comprise a seal sleeve statically sealed against the shaft of the mixer drive shaft, and a cartridge device housing sealed against the seal sleeve with two primary seals to provide dynamic sealing. These two seals have two static and two rotary faces. The friction between the static and rotary faces causes the seals to heat, which has a negative impact on their service life. If the fluid mixing process, in which the cartridge device is applied, is carried out at high temperatures, the effect of seal overheating becomes even more pronounced. The surfaces of mechanical seals used in high-temperature applications are exposed to high temperatures to such an extent that damages may occur, such as blistering, cracks and distortion of the faces. In addition, the remaining parts of the mechanical seal of the cartridge device in high-temperature applications are impacted as well, particularly elastomeric parts and, in general, secondary seals. To provide cooling, a cooling fluid is provided in the cartridge space between the two mechanical seals, the fluid being a barrier fluid or a buffer fluid. When this fluid has a pressure lower than that of the process fluid, it is a buffer fluid, and when this fluid has a pressure higher than that of the process fluid, it is a barrier fluid. The cooling fluid carries away the heat generated in the device as a result of friction between the mechanical faces and the heat transferred to the device from the high-temperature application out of the cartridge device. Fluid circulation through the cartridge space may be provided by way of natural circulation, i.e. by way of thermosiphon heat transfer. The heat is better dissipated if the cartridge space is equipped with a pumping ring or a pumping screw, since a forced fluid flow provides for better cooling. A pumping ring or a pumping screw is an efficient solution to dissipating heat at mixer shaft rotation speeds exceeding 1000 rpm. At shaft rotation speeds lower than the above-indicated one, a fluid film is not created between the static and dynamic faces of the mechanical seal, so the faces are in a constant frictional contact and this leads to higher heat generation and a need to dissipate more heat. The problem can be solved by installing an auxiliary circulation pump for a forced flow increase through the cartridge device; however, such a solution requires extra equipment, resulting in poorer operation reliability and higher energy consumption.

### Technical problem

The technical problem is to provide a cartridge device provided with a double mechanical seal to seal a drive shaft of a mixer, vibrational mixer etc., that will allow good heat dissipation even in high-temperature applications at shaft revolutions lower than 1000 rpm and without using an auxiliary circulation pump. A further goal of the invention is to ensure smooth operation of the cartridge device with moderate radial and axial shaft displacement.

### Solution to the technical problem

The relative terms such as at the top, downwards etc. are defined according to the orientation of the cartridge device in the operating position.

The technical problem is solved by a cartridge device provided with a double mechanical seal to seal a drive shaft of a mixer, vibrational mixer etc., comprising:
- a seal sleeve adapted to receive a drive shaft of a mixer, vibrational mixer etc., and provided with means for rotatably fixed fastening of the shaft in the seal sleeve, and with at least one first sealing means for static sealing of the shaft while in use;
- a cartridge device housing mounted on the seal sleeve and further comprising a flange adapted to be coupled to a housing of a mixer, vibrational mixer etc., and provided with means for fastening to the housing of the mixer, vibrational mixer etc., and with at least one second sealing means for static sealing while in use;
- a process mechanical seal arranged between the seal sleeve and the cartridge device housing to seal the process area against the cartridge space;
- an atmospheric mechanical seal arranged between the seal sleeve and the cartridge device housing to seal the surrounding area against the cartridge space;
- wherein the cartridge space delimited by an outer circumference of the seal sleeve, an inner circumference of the housing of the cartridge device, the process mechanical seal and the atmospheric mechanical seal is intended to receive a barrier/buffer fluid; and
- a volumetric pump integrated in the cartridge space to divide it in two portions, the volumetric pump comprising a stator arranged inside the cartridge device housing and having an inner cylindrical wall arranged eccentrically with respect to its outer cylindrical wall, a rotor having at least four, preferably exactly four spring biased sliding vanes, the rotor being arranged on the outer circumference of the seal sleeve and arranged in the stator centrally with respect to the outer cylindrical wall of the stator, and two axial plates laterally closing the rotor, the first axial plate being provided with an inlet port and the second axial plate being provided with an outlet port arranged in the radial direction of the cartridge device diametrically opposite the inlet port,
- wherein the cartridge device housing is provided with two apertures intended for the attachment of ducts of a heat exchanger, the first aperture being provided in the zone close to the process mechanical seal and the second aperture being provided in the zone close to the atmospheric mechanical seal.

The advantage of the cartridge device provided with a double mechanical seal of the invention over known devices is to provide a sufficient flow of the barrier/buffer fluid to cool the faces of the mechanical seals even when used in high-temperature applications and/or applications having low rotational speeds, i.e. rotational speeds below 1000 rpm. This eliminates a need for building in an extra circulation pump to ensure a sufficient flow through the cartridge device, which increases its energy efficiency and operation reliability.

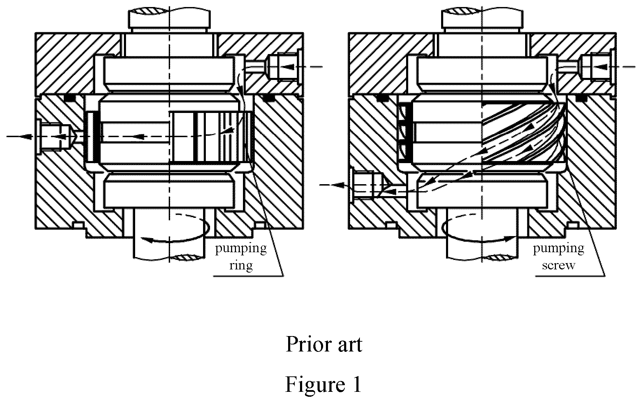

Figure 1: Cartridge device having a pumping ring and a cartridge device having a pumping screw, prior art

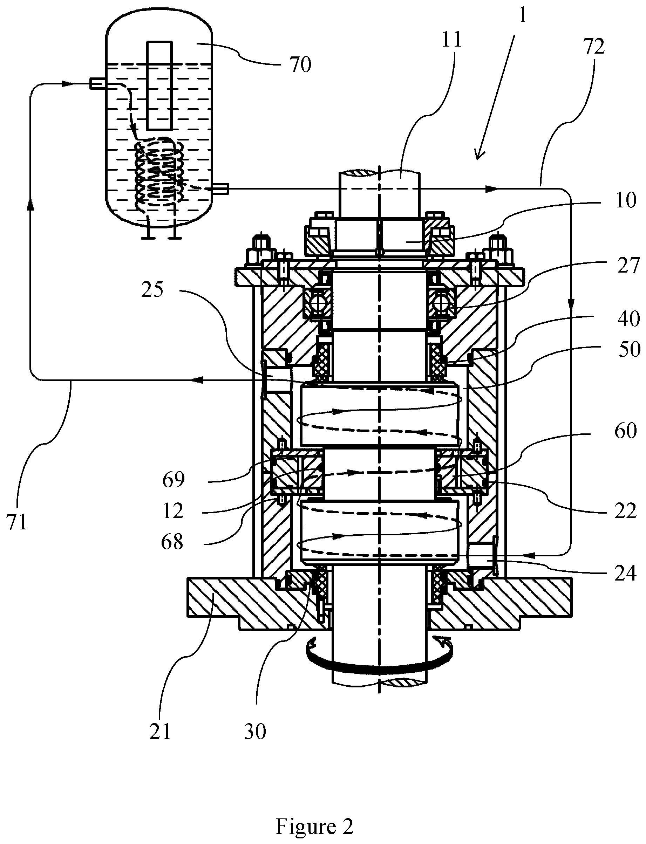

Figure 2: Cartridge device provided with a double mechanical seal when in use
Figure 3: Cartridge device provided with a double mechanical seal, a cross-section and a detail
Figure 4: A pump in cross-section; a) illustration of an axial displacement of the seal sleeve with respect to the pump and of deflection of the seal sleeve due to vibrations of a drive shaft of the mixer; b) illustration of deflection of the seal sleeve due to vibrations of the drive shaft of the mixer; c) illustration without deflection of the seal sleeve

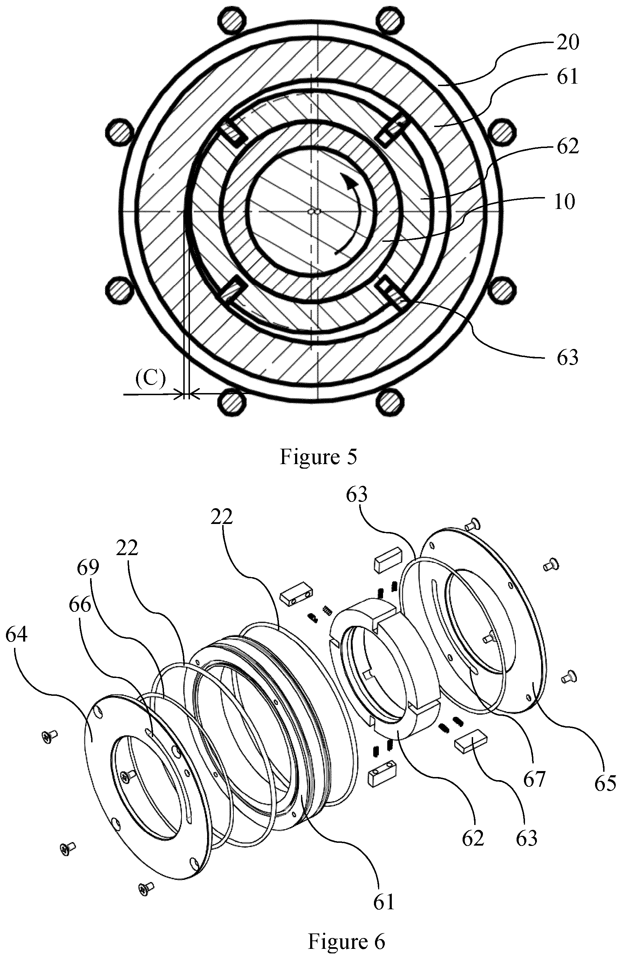

Figure 5: Cross-section A-A of the cartridge device of Figure 3
Figure 6: Pump in exploded view

The invention is described in more detail hereinbelow.

The technical problem is solved by a cartridge device 1 provided with a double mechanical seal to seal a drive shaft of a mixer, vibrational mixer etc., comprising:
- a seal sleeve 10 adapted to receive a drive shaft 11 of a mixer, vibrational mixer etc., and provided with means for rotatably fixed fastening of the shaft in the seal sleeve, and with at least one first sealing means for static sealing of the shaft while in use;
- a cartridge device housing 20 mounted on the seal sleeve 10 and further comprising a flange 21 adapted to be coupled to a housing of a mixer, vibrational mixer etc., and provided with means for fastening to the housing of the mixer, vibrational mixer etc., and with at least one second sealing means for static sealing while in use;
- a process mechanical seal 30 arranged between the seal sleeve and the cartridge device housing to seal the process area against the cartridge space;
- an atmospheric mechanical seal 40 arranged between the seal sleeve and the cartridge device housing to seal the surrounding area against the cartridge space;
- wherein the cartridge space 50 delimited by an outer circumference of the seal sleeve, an inner circumference of the housing of the cartridge device, the process mechanical seal and the atmospheric mechanical seal is intended to receive a barrier/buffer fluid; and
- a volumetric pump 60 integrated in the cartridge space to divide it in two portions, the volumetric pump comprising a stator 61 arranged inside the cartridge device housing 20 and having an inner cylindrical wall arranged eccentrically with respect to its outer cylindrical wall, a rotor 62 having at least four, preferably exactly four spring biased sliding vanes 63, the rotor being arranged on the outer circumference of the seal sleeve and arranged in the stator 61 centrally with respect to the outer cylindrical wall of the stator, and two axial plates 64, 65 laterally closing the rotor, the first axial plate 64 being provided with an inlet port 66 and the second axial plate being provided with an outlet port 67 arranged in the radial direction of the cartridge device diametrically opposite the inlet port,
wherein the cartridge device housing is provided with two apertures 24, 25 intended for the attachment of ducts 71, 72 of a heat exchanger 70, the first aperture 24 being provided in the zone close to the process mechanical seal and the second aperture 25 being provided in the zone close to the atmospheric mechanical seal.

The inlet port 66 and the outlet port 67 are formed in the shape of a circular arc extending over the entire area between two adjacent spring biased sliding vanes 63.

It is also possible to configure the volumetric pump in a way to have the inlet port 66 and the outlet port 67 arranged in reverse order, so that the fluid flow, when the cartridge device is in use, flows from the top downwards; however, such a configuration is not optimal as the fluid flow is directed in the direction opposite to the natural convection.

In a preferred embodiment, the seal sleeve is pivotally arranged in the cartridge device housing by way of a roller bearing 26. The use of a roller bearing prevents excessive radial deflection of the shaft.

Based on the anticipated rotational speed of the shaft to be sealed, the cartridge device provided with a double mechanical seal may be configured in a way to ensure an optimal flow of 1 to 12 dm³/min. The parameters impacting the flow are as follows: rotational speed of the shaft of a mixer, vibrational mixer, etc., diameter and eccentricity of the stator 61, width of the vanes 63, and a radial clearance (C) between the stator 61 and the rotor 62 in the area where their walls come closest to each other. The recommended size of the clearance (C) is at least 0.5 mm.

The cartridge device provided with a double mechanical seal is preferably configured in a way that the housing is divided in the area of the volumetric pump into two portions in a plane perpendicular to the axial axis of the device, both housing portions having a radial recess to accommodate the stator 61 and the axial plates 64, 65, the cartridge device further comprising axial pins 68 circumferentially equidistantly arranged in the axial faces of the recess. The pins 68 make it possible to accurately adjust the relative position of the inlet port 66 and the outlet port 67, such that the inlet port 66 and the outlet port 67 lie diametrically opposite each other in the radial direction of the cartridge device.

The cartridge device further comprises third sealing means 12 to seal the rotor 62 against the seal sleeve 10, fourth seal means 22 to seal the cartridge device housing 20 against the stator 61, and fifth sealing means 69 to seal the stator 61 against the axial plates 64, 65.

The first, second, third, fourth and fifth sealing means are preferably embodied as O-rings.

It is recommended that the volumetric pump be dimensioned to provide a clearance of 0.05 mm to 0.1 mm between the axial plates 64, 65 and the pump vanes 63, which contributes to an efficient operation of the volumetric pump and does simultaneously not cause wear of the spring biased sliding vanes.

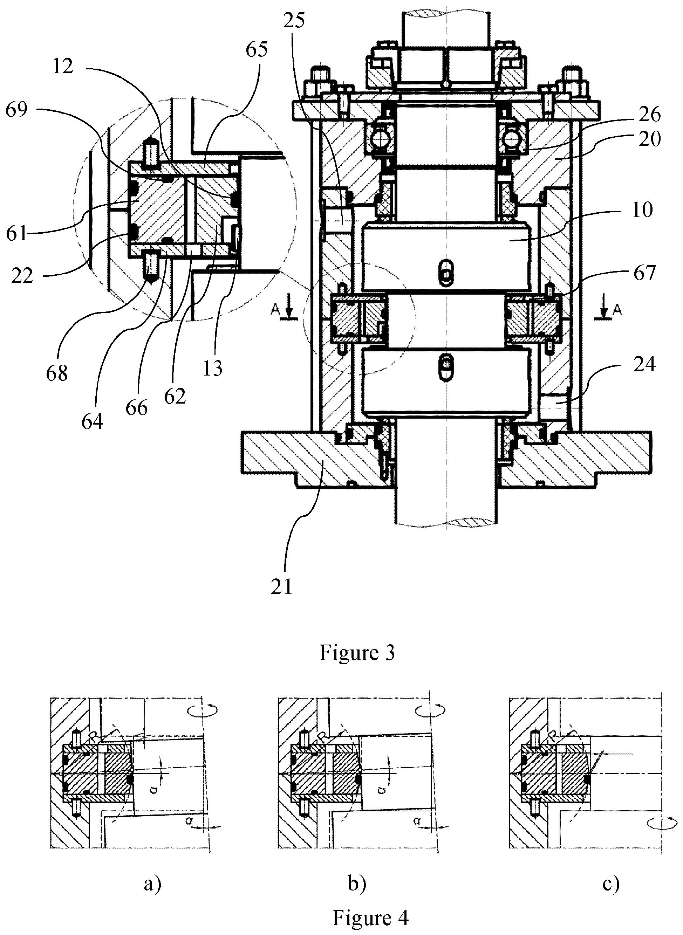

According to a preferred embodiment, the inner circumferential surface of the rotor is provided in the shape of a torus. This allows a smooth operation of the cartridge device even in case the seal sleeve is axially displaced with respect to the pump and/or the seal sleeve is deflected due to vibrations of the drive shaft of the mixer, vibrational mixer etc., when the cartridge device is used. This is shown in Figure 4. The recommended size of the clearance (C1) between the seal sleeve 10 and the pump rotor 62 is 0.1 mm to 0.2 mm. This allows a smooth operation and prevents the seal sleeve from getting clamped in the rotor; at the same time, possible leakage of the third sealing means 12 to seal the rotor 62 against the seal sleeve 10 is prevented.

The cartridge device may further comprise at least one key 13 to transfer torque from the seal sleeve 10 to the pump rotor 62. The recommended clearance between the key and the rotor should be at least 0.1 mm, which allows for a certain relative axial play between the seal sleeve 10 and the pump 60.

## Claims

1. A cartridge device (1) provided with a double mechanical seal to seal a drive shaft of a mixer, vibrational mixer etc., comprising:
- a seal sleeve (10) adapted to receive a drive shaft (11) of a mixer, vibrational mixer etc., and provided with means for rotatably fixed fastening of the shaft in the seal sleeve, and with at least one first sealing means for static sealing of the shaft while in use;
- a cartridge device housing (20) mounted on the seal sleeve (10) and further comprising a flange (21) adapted to be coupled to a housing of a mixer, vibrational mixer etc., and provided with means for fastening to the housing of the mixer, vibrational mixer etc., and with at least one second sealing means for static sealing while in use;
- a process mechanical seal (30) arranged between the seal sleeve and the cartridge device housing to seal the process area against the cartridge space;
- an atmospheric mechanical seal (40) arranged between the seal sleeve and the cartridge device housing to seal the surrounding area against the cartridge space;
- wherein the cartridge space (50) delimited by an outer circumference of the seal sleeve, an inner circumference of the housing of the cartridge device, the process mechanical seal and the atmospheric mechanical seal is intended to receive a barrier/buffer fluid; and
- a volumetric pump (60) integrated in the cartridge space to divide it in two portions, the volumetric pump comprising a stator (61) arranged inside the cartridge device housing (20) and having an inner cylindrical wall arranged eccentrically with respect to its outer cylindrical wall, a rotor (62) having at least four, preferably exactly four spring biased sliding vanes (63), the rotor being arranged on the outer circumference of the seal sleeve and arranged in the stator (61) centrally with respect to the outer cylindrical wall of the stator, and two axial plates (64, 65) laterally closing the rotor, the first axial plate (64) being provided with an inlet port (66) and the second axial plate being provided with an outlet port (67) arranged in the radial direction of the cartridge device diametrically opposite the inlet port,
wherein the cartridge device housing is provided with two apertures (24, 25) intended for the attachment of ducts (71, 72) of a heat exchanger (70), the first aperture (24) being provided in the zone close to the process mechanical seal and the second aperture (25) being provided in the zone close to the atmospheric mechanical seal.

2. The cartridge device (1) according to claim 1, **characterized in that** the inlet port (66) and the outlet port (67) are formed in the shape of a circular arc extending over the entire area between two adjacent spring biased sliding vanes (63).

3. The cartridge device (1) according to any of the preceding claims, **characterized in that** the seal sleeve is pivotally arranged in the cartridge device housing by way of a roller bearing (26).

4. The cartridge device (1) according to any of the preceding claims, **characterized in that** the size of a radial clearance (C) between the stator (61) and the rotor (62) is at least 0.5 mm in the area where their walls come closest to each other.

5. The cartridge device (1) according to any of the preceding claims, **characterized in that** the housing is divided in the area of the volumetric pump into two portions in a plane perpendicular to the axial axis of the device, both housing portions having a radial recess to accommodate the stator (61) and the axial plates (64, 65), the cartridge device further comprising axial pins (68) circumferentially equidistantly arranged in the axial faces of the recess.

6. The cartridge device (1) according to any of the preceding claims, **characterized by** further comprising third sealing means (12) to seal the rotor (62) against the seal sleeve (10), fourth seal means (22) to seal the cartridge device housing (20) against the stator (61), and fifth sealing means (69) to seal the stator (61) against the axial plates (64, 65).

7. The cartridge device (1) according to the previous claim, **characterized in that** the first, second, third, fourth and fifth sealing means are embodied as O-rings.

8. The cartridge device (1) according to any of the preceding claims, **characterized in that** the volumetric pump is dimensioned to provide a clearance of 0.05 mm to 0.1 mm between the axial plates (64, 65) and the pump vanes (63).

9. The cartridge device (1) according to any of the preceding claims, **characterized in that** the inner circumferential surface of the rotor is provided in the shape of a torus.

10. The cartridge device (1) according to any of the preceding claims, **characterized in that** a clearance (C1) between the seal sleeve (10) and the pump rotor (62) is 0.1 mm to 0.2 mm.

11. The cartridge device (1) according to any of the preceding claims, **characterized by** further comprising at least one key (13) to transfer torque from the seal sleeve (10) to the pump rotor (62), the clearance between the key and the rotor being at least 0.1 mm.
